# EUROPÄISCHE PATENTSCHRIFT

(11) **EP 3 354 173 B1**
(45) Veröffentlichungstag und Bekanntmachung des Hinweises auf die Patenterteilung: **20.11.2019**
(21) Anmeldenummer: 17206865.2
(22) Anmeldetag: 13.12.2017
(51) Int. Cl.: A47J 31/40

(54) **MISCHVORRICHTUNG FÜR EINEN GETRÄNKEAUTOMATEN SOWIE GETRÄNKEAUTOMAT MIT DER MISCHVORRICHTUNG**
MIXING DEVICE FOR A BEVERAGE MACHINE AND BEVERAGE MACHINE HAVING THE MIXING DEVICE
DISPOSITIF DE MÉLANGE POUR UN DISTRIBUTEUR DE BOISSONS AINSI QUE DISTRIBUTEUR DE BOISSONS DOTÉ DU DISPOSITIF DE MÉLANGE

(30) Priorität: 25.01.2017 DE 102017101391
(43) Veröffentlichungstag der Anmeldung: 01.08.2018
(73) Patentinhaber: Jakob Gerhardt GmbH, 72622 Nürtingen (DE)
(72) Erfinder: Gerhard, Bernd, 72622 Nürtingen (DE)
(74) Vertreter: Negendanck, Matthias

(56) Entgegenhaltungen:
- EP-A1- 2 085 001
- EP-A2- 1 915 931
- WO-A1-2015/044147
- WO-A1-2015/091143
- DE-U1- 29 602 555
- JP-A- H11 178 721

## Beschreibung

Die Erfindung betrifft eine Mischvorrichtung für einen Getränkeautomaten mit einem Mischgehäuse, wobei das Mischgehäuse einen Mischraum zur Aufnahme eines Pulvers und eines Heißwassers aufweist, wobei das Mischgehäuse eine Einlassanordnung für das Pulver und/oder das Heißwasser aufweist, mit einer Mischeinrichtung zur Vermischung des Pulvers und des Heißwassers innerhalb des Mischraums, wobei das Mischgehäuse einen Auslassöffnung für das Gemisch aufweist. Ferner betrifft die Erfindung einen Getränkeautomaten mit der Mischvorrichtung.

Bei einem Heißgetränkeautomaten wird zur schnellen Herstellung von fertigen Getränken, ein Pulver in eine Flüssigkeit, beispielsweise heißes Wasser, gebracht und darin gelöst. Dabei wird das Pulver in einer genau dosierten Menge, durch einen Zufuhrtrichter in eine Mischkammer gebracht, wobei das Pulver durch Zufuhr der Flüssigkeit gelöst wird und durch zusätzliches Rühren eines Rührers vermengt wird. Anschließend läuft das fertige Getränk über einen Auslauf in einen Trinkbecher ab. Während der Zuführung des Pulvers können dabei feine Bestandteile zusammen mit dem vom heißen Wasser abgegebenen Wasserdampf aufsteigen und sich im Inneren des Getränkeautomaten absetzen. Es ist dabei bekannt diese Dämpfe aus dem Inneren der Mischkammer über eine Absaugung abzusaugen.

Die Druckschrift WO 2015/091143 A1, die den nächstkommenden Stand der Technik bildet, offenbart eine Getränkezubereitungsbaugruppe, welche einen Behälter zum Bevorraten eines wasserlöslichen Getränkepulvers aufweist, wobei der Behälter einen Tank und einen Pulverauslass umfasst. Die Getränkezubereitungsbaugruppe weist eine Auflösungskammer zum Zubereiten eines Getränks aus dem wasserlöslichen Getränkepulver und einem Verdünnungsmittel, wobei die Auflösungskammer mindestens einen Verdünnungsmitteleinlass und einen Getränkeauslass sowie eine Schütte zum Leiten des wasserlöslichen Getränkepulvers aus dem Pulverauslass des Behälters zu der Auflösungskammer umfasst. Zudem weist die Getränkezubereitungsbaugruppe einen Luftauslass auf, der darauf ausgelegt ist, die Auflösungskammer zu entlüften, wobei der Pulverauslass über eine Leitung mit der Schütte verbunden ist, und wobei der Pulverauslass, die Leitung, die Schütte und die Auflösungskammer durch luftdichte Anschlüsse miteinander verbunden sind, und wobei die Baugruppe einen Lufteinlass umfasst, wobei der Lufteinlass ausschließlich oberhalb der Schütte angeordnet ist.

Die Druckschrift DE 299 074 64 U1 beschreibt eine Mischvorrichtung zum Mischen eines pulverförmigen Ausgangsmaterials mit Wasser, die die Zutaten eines in einem Getränkeautomat bereiteten heißen Getränks bilden, bestehend aus; einer Homogenisierungskammer mit einer Einlassöffnung für eine Mischung von Zutaten und einer Auslassöffnung für das Abfließen des Getränks zur Ausgabestelle, motorgetriebenen Mitteln zur Homogenisierung der Zutatenmischung im Inneren dieser Kammer, einem Mischraum, der durch die genannte Einlassöffnung mit der Homogenisierungskammer verbunden ist und mit Mitteln für die Zufuhr des pulverförmigen Ausgangsmaterials von einem darüber befindlichen Behälter bzw. des heißen Wassers von einem daneben befindlichen Warmwasserkessel in zwei im Wesentlichen senkrecht zueinander verlaufenden Richtungen versehen ist, wobei die genannten Mittel für die Zufuhr des Ausgangsmaterials in einem Stück mit ersten Mitteln zum Zurückhalten der flüchtigsten und feinsten Bestandteile des pulverförmigen Ausgangsmaterials, die von dem Wasserdampf des ins Innere des Mischraums eingespritzten heißen Wassers aufgenommen werden, gefertigt sind. Der Erfindung liegt die Aufgabe zugrunde, eine besonders wartungsarme und hygienische Mischvorrichtung zu schaffen.

Diese Aufgabe wird durch eine Mischvorrichtung mit den Merkmalen des Anspruchs 1 sowie einen Getränkeautomaten mit dem Merkmal des Anspruchs 12 gelöst. Bevorzugte oder vorteilhafte Ausführungsformen der Erfindung ergeben sich aus den Unteransprüchen, der nachfolgenden Beschreibung und/oder den beigefügten Figuren.

Im Rahmen der Erfindung wird eine Mischvorrichtung vorgeschlagen, welche für einen Getränkeautomaten ausgebildet und/oder geeignet ist. Insbesondere dient der Getränkeautomat, vorzugsweise die Mischvorrichtung, zur Zubereitung von mindestens einem Heißgetränk, beispielsweise Kaffee, Suppe, Kakaogetränk, Tee etc. Alternativ kann die Mischvorrichtung auch zur Zubereitung eines Getränkebestandteils, beispielsweise Milchschaum, dienen. Vorzugsweise ist der Getränkeautomat als ein Selbstbedienungsautomat, besonders bevorzugt als ein vollautomatischer Getränkeautomat ausgebildet.

Die Mischvorrichtung weist ein Mischgehäuse auf, wobei das Mischgehäuse einen Mischraum zur Aufnahme eine Pulvers und eines Heißwassers aufweist. Insbesondere sind das Pulver und das Heißwasser voneinander getrennt, wobei bei einem Zubereitungsvorgang das Pulver und das Heißwasser in dem Mischgehäuse zusammengeführt werden. Vorzugsweise ist das Pulver ein lösliches Getränkepulver. Im weitesten Sinne kann jedoch unter Pulver auch eine Pulvermischung, z.B. eine Kombination aus Zucker und/oder Milchpulver und/oder Kaffeepulver etc., verstanden werden. Besonders bevorzugt weist das Heißwasser eine Temperatur von mehr als 50 °C, vorzugsweise mehr als 60 °C, im Speziellen mehr als 70 °C auf.

Das Mischgehäuse weist eine Einlassanordnung für das Pulver und/oder das Heißwasser auf. Insbesondere dient die Einlassanordnung dazu, das Pulver und das Heißwasser in das Mischgehäuse einzuleiten, wobei das Pulver und das Heißwasser während oder nach dem Einlass miteinander vermengt werden. Vorzugsweise ist die Einlassanordnung oberhalb des Mischraums angeordnet, wobei das Pulver und das Heißwasser nacheinander oder zeitgleich oder simultan in den Mischraum geleitet werden.

Die Mischvorrichtung weist eine Mischeinrichtung zur Vermischung des Pulvers und des Heißwassers innerhalb des Mischraums auf. Die Mischvorrichtung hat insbesondere die Funktion das Pulver und das Heißwasser durch eine Dreh- und/oder Rührbewegung zu vermischen, so dass ein homogenes Gemisch erzeugt wird. Vorzugsweise ist das Gemisch ein Endprodukt des Getränkeautomaten, besonders bevorzugt bildet das Gemisch das Heißgetränk, z.B. den Kaffee etc.

Die Mischeinrichtung ist insbesondere an einer Außenseite des Mischgehäuses angeordnet. Vorzugsweise ist die Mischvorrichtung durch einen Antriebsmotor, besonders bevorzugt einen Elektromotor, mit einer Antriebswelle gebildet. Die Antriebswelle ist insbesondere über das Mischgehäuse in den Mischraum geführt und/oder durch das Mischgehäuse gelagert. Die Antriebswelle weist vorzugsweise endseitig ein Rührelement auf, welches drehfest mit der Antriebswelle verbunden ist. Beispielsweise ist das Rührelement als ein Scheibenrührer und/oder als ein Propellerrührer und/oder als ein Schaufelrührer ausgebildet. Besonders bevorzugt ragt die Antriebswelle zumindest teilweise in den Mischraum, so dass das Rührelement innerhalb des Mischgehäuses, insbesondere in dem Mischraum, angeordnet ist.

Das Mischgehäuse weist eine Auslassöffnung für das Gemisch auf. Insbesondere ist die Auslassöffnung unterhalb des Mischraums angeordnet, so dass das Gemisch aus dem Mischraum in ein Aufnahmegefäß abfließen kann. Insbesondere ist die Auslassöffnung strömungstechnisch nach der Mischeinrichtung angeordnet, so dass das Gemisch zuerst über das Rührelement und anschließend weiter über die Auslassöffnung abfließt. Besonders bevorzugt ist die Auslassöffnung durch einen Auslasskanal oder ein Auslassrohr oder eine Auslassrinne gebildet. Beispielsweise ist das Aufnahmegefäß ein Becher oder eine Tasse oder ein Glas etc.

Im Rahmen der Erfindung wird vorgeschlagen, dass die Mischvorrichtung eine Gebläseeinrichtung und eine Abblasöffnung aufweist. Insbesondere ist die Gebläseeinrichtung als eine Strömungsmaschine ausgebildet. Vorzugsweise weist die Gebläseeinrichtung ein in einem Gehäuse rotierendes Laufrad auf, wobei die Umgebungsluft angesaugt und verdichtet wird, so dass zwischen einer Ansaugseite und einer Druckseite ein Druckverhältnis erzeugt wird. Besonders bevorzugt weist die Gebläseeinrichtung ein Druckverhältnis zwischen 1,1 und 3 auf. Besonders bevorzugt ist die Gebläseeinrichtung als ein Axialventilator und/oder als ein Diagonalventilator und/oder als ein Zentrifugalventilator und/oder als Radialventilator ausgebildet.

Die Gebläseeinrichtung erzeugt eine Luftströmung, so dass ein Wasserdampf des Heißwassers aus dem Mischgehäuse über die Abblasöffnung abgeblasen wird. Insbesondere hat die Gebläseeinrichtung die Funktion einen Überdruck in dem Mischgehäuse zu erzeugen, wobei durch den erzeugten Überdruck der Wasserdampf aus dem Mischgehäuse verdrängt wird. Vorzugsweise ist der Wasserdampf ein reiner Wasserdampf oder ein Pulver-Wasserdampf. Insbesondere endet die Abblasöffnung in einem Außenbereich oder in einem Innenbereich des Getränkeautomaten. Optional ergänzend ist die Abblasöffnung mit einer Abscheideeinrichtung zur Abscheidung von Pulverresten aus dem Wasserdampf verbunden. Beispielsweise weist die Abscheideeinrichtung hierzu ein Labyrinth und/oder einen Filter auf.

Erfindungsgemäss verläuft ein Luftströmungsweg von der Gebläseeinrichtung über das Mischgehäuse, vorzugsweise den Mischraum, zu der Abblasöffnung. Insbesondere ist die Gebläseeinrichtung strömungstechnisch direkt oder indirekt mit dem Mischraum verbunden, so dass der Überdruck in dem Mischraum erzeugt wird. Vorzugsweise verläuft der Luftströmungsweg bei der direkten Verbindung von der Gebläseeinrichtung direkt durch den Mischraum zu der Auslassöffnung. Alternativ verläuft der Luftströmungsweg bei der indirekten Verbindung zuerst über ein weiteres Gehäuse, im Speziellen über die Einlassanordnung, durch den Mischraum zu der Auslassöffnung.

Der Vorteil der Erfindung besteht darin, dass durch das Ausblasen des Wasserdampfs eine bessere Abscheidung von Wasserdampf und Pulver möglich ist, wobei Anbackungen durch Pulverreste im Wasserdampf durch die Erfindung vermieden oder zumindest reduziert werden. Ferner werden durch die Gebläseeinrichtung Pulverrückstände in der Pulverrutsche reduziert oder vermieden. Dadurch wird insbesondere eine Pulverstopfung innerhalb der Pulverrutsche bzw. eine Verschmutzung der Mischvorrichtung stark reduziert. Ferner kann durch die erfindungsgemäße Ausgestaltung der Wartungsaufwand und/oder die Wartungszeit deutlich reduziert werden. Somit erhöht sich auch die Betriebssicherheit der Mischvorrichtung, wobei Störungen oder Ausfälle der Mischvorrichtung reduziert werden. Ein besonderer Vorteil der Erfindung besteht darin, dass die Gebläseeinrichtung nicht gereinigt werden muss, da die Gebläseeinrichtung im Strömungsweg vor der Mischkammer angeordnet ist, so dass Pulver- und/oder Dampfpartikel nicht die Gebläseeinrichtung verschmutzen können.

In einer bevorzugten Realisierung verläuft der Luftströmungsweg innerhalb eines luftdicht abgeschlossenen Systems. Insbesondere wird das luftdicht abgeschlossene System mindestens durch das Mischgehäuse gebildet. Optional ergänzend können weitere Bauteile der Mischvorrichtung luftdicht mit dem Mischgehäuse verbunden sein. Besonders bevorzugt ist die Mischvorrichtung im Bereich des Luftströmungsweges zwischen der Gebläseeinrichtung und der Abblasöffnung luftdicht ausgebildet.

In einer bevorzugten Weiterbildung der Erfindung weist das Mischgehäuse die Abblasöffnung auf, wobei die Abblasöffnung oberhalb des Mischraums angeordnet ist. Insbesondere ist die Abblasöffnung durch eine Bohrung oder einen Durchbruch gebildet. Beispielsweise weist die Abblasöffnung einen runden oder einen ovalen oder einen quadratischen Querschnitt auf. Alternativ kann die Abblasöffnung auch als ein rohrförmiger Ansatz gebildet sein, so dass beispielsweise ein Schlauch oder die Abscheideeinrichtung an den Ansatz montiert werden kann. Vorzugsweise ist der Ansatz einstückig an das Mischgehäuse angegossen. Insbesondere ist die Abblasöffnung durch Urformen oder durch Trennen in das Mischgehäuse eingebracht. Vorzugweise ist die Abblasöffnung in einer oberen Hälfte, vorzugsweise in einem oberen Drittel, im Speziellen in einem oberen Viertel des Mischgehäuses angeordnet.

In einer weiteren bevorzugten Ausgestaltung weist die Mischvorrichtung eine Pulverrutsche zur Verbindung von mindestens einem Vorratsbehälter für das Pulver mit dem Mischgehäuse auf. Die Pulverrutsche dient insbesondere zur Verbindung des Vorratsbehälters mit dem Mischgehäuse, so dass das Pulver von dem Vorratsbehälter über die Pulverrutsche in das Mischgehäuse geleitet wird. Besonders bevorzugt bildet der Vorratsbehälter einen Bestandteil des Getränkeautomaten, im Speziellen der Mischvorrichtung. Der Vorratsbehälter kann dabei unmittelbar mit der Pulverrutsche verbunden sein. Vorzugsweise ist die Pulverrutsche als ein Rohr oder als eine Rinne ausgebildet. Im Speziellen werden die Fördereinrichtung durch das Pulver und/oder der Vorratsbehälter durch einen zusätzlichen Deckel luftdicht abgeschlossen, so dass das luftdicht abgeschlossene System gebildet ist.

Optional ergänzend weist der Vorratsbehälter eine Fördereinrichtung auf, wobei die Fördereinrichtung mit der Pulverrutsche verbunden ist. Die Fördereinrichtung hat die Funktion das Pulver zu portionieren und/oder zu dosieren, so dass sich ein Mischverhältnis aus dem Heißwasser und dem Pulver einstellen lässt. Vorzugsweise ist die Fördereinrichtung als eine Förderschnecke und/oder eine Dosierklappe ausgebildet. Das Pulver wird hierzu von dem Vorratsbehälter über die Fördereinrichtung in Richtung der Pulverrutsche transportiert.

Optional ergänzend kann der Getränkeautomat mindestens einen weiteren Vorratsbehälter zur Aufnahme mindestens eines weiteren Pulvers mit einer weiteren Fördereinrichtung aufweisen. Insbesondere ist die Pulverrutsche mit dem Vorratsbehälter und dem weiteren Vorratsbehälter und/oder der Fördereinrichtung und der weiteren Fördereinrichtung verbunden. Vorzugsweise wird das weitere Pulver von dem weiteren Vorratsbehälter ggf. über die weitere Förderschnecke in Richtung der Pulverrutsche transportiert. Besonders bevorzugt werden die beiden Pulver zugleich oder getrennt voneinander dem Mischgehäuse zugeführt.

Die Gebläseeinrichtung ist mit der Pulverrutsche strömungstechnisch verbunden, so dass der Luftströmungsweg von der Gebläseeinrichtung über die Pulverrutsche, das Mischgehäuse zu der Abblasöffnung verläuft. Insbesondere ist die Gebläseeinrichtung direkt mit der Pulverrutsche verbunden. Vorzugsweise erzeugt die Gebläseeinrichtung einen Überdruck in der Pulverrutsche und/oder dem Mischgehäuse. Besonders bevorzugt wird das Heißwasser erst in dem Mischgehäuse zugeführt, so dass durch den Überdruck ein Aufsteigen des Wasserdampfs durch die Pulverrutsche verhindert wird. Dadurch wird insbesondere vermieden, dass Feuchtigkeit in die Pulverrutsche aufsteigt und das Pulver verklumpt.

Besonders bevorzugt ist die Pulverrutsche als das Rohr ausgebildet, wobei das Rohr eine erste und eine zweite Rohröffnung aufweist. Besonders bevorzugt ist die Pulverrutsche nach oben hin offen, so dass die erste Rohröffnung gebildet ist. Die erste Rohröffnung kann als Einlass für das Pulver aus dem Vorratsbehälter bzw. der Fördereinrichtung und/oder als Lufteinlass für die von der Gebläseeinrichtung erzeugten Luft dienen.

Im Speziellen ist die Pulverrutsche mit einem Einblasstutzen verbunden, so dass die erste Rohröffnung durch den Einblasstutzen gebildet ist. Vorzugsweise verlängert der Einblasstutzen die Pulverrutsche, wobei der Einblasstutzen als Schleife und/oder als ein Kanal ausgebildet ist, so dass der Luftströmungsweg mindestens einmal umgelenkt wird. Alternativ kann der Einblasstutzen auch seitlich an der Pulverrutsche angeordnet sein und/oder angegossen sein. Insbesondere ist die Gebläseeinrichtung mit dem Einblasstutzen direkt verbunden, sodass der Einblasstutzen als Lufteinlass für die von der Gebläseeinrichtung erzeugte Luft dient.

Optional ergänzend weist die Pulverrutsche einen Luftzuführungsabschnitt auf. Insbesondere verbindet der Luftzuführungsabschnitt den Einblasstutzen unmittelbar mit der Pulvertusche, so dass der Luftströmungsweg von dem Einblasstutzen über den Luftführungsabschnitt durch die Pulverrutsche verläuft. Bevorzugt sind der Einblasstutzen und/oder der Luftzuführungsabschnitt, insbesondere die Pulverrutsche, einstückig, z.B. aus einem gemeinsamen Kunststoffspritzguss, gefertigt.

Vorzugsweise ist die Pulverrutsche unten hin offen, so dass die zweite Rohröffnung gebildet ist. Besonders bevorzugt endet die Pulverrutsche mit der zweiten Rohröffnung vor oder in dem Mischgehäuse. Im Speziellen verläuft der Luftströmungsweg somit von der Gebläseeinrichtung über die erste Rohröffnung, die Pulverrutsche, die zweite Rohröffnung, den Mischraum zu der Abblasöffnung. Durch den beschriebenen Luftströmungsweg wird zudem sichergestellt, dass Pulverrückstände innerhalb der Pulverrutsche in den Mischraum mit abgeblasen werden.

In einer weiteren Ausgestaltung weist die Mischvorrichtung ein Verbindungsgehäuse auf, wobei die Pulverrutsche zumindest abschnittsweise innerhalb des Verbindungsgehäuses angeordnet ist. Das Verbindungsgehäuse verbindet dabei bevorzugt die Gebläseeinrichtung strömungstechnisch mit der Pulverrutsche, sodass der Luftströmungsweg über das Verbindungsgehäuse geführt ist. Insbesondere ist das Verbindungsgehäuse als ein luftdicht abgeschlossener Hohlkörper ausgebildet, wobei die Pulverrutsche im Inneren des Verbindungsgehäuses vollständige oder zumindest teilweise angeordnet ist. Besonders bevorzugt ist mindestens die erste Rohröffnung innerhalb des Verbindungsgehäuses angeordnet.

Prinzipiell können die Pulverrutsche und das Verbindungsgehäuse als zwei separate Bauteile ausgebildet sein. Alternativ können die Pulverrutsche und das Verbindungsgehäuse einstückig, z.B. aus einem gemeinsamen Kunststoffspritzguss, gefertigt sein. Optional ergänzend ist das Verbindungsgehäuse mit der Fördereinrichtung und/oder mit dem Vorratsbehälter und/oder mit dem Mischgehäuse verbunden.

Der Luftströmungsweg verläuft von der Gebläseeinrichtung über das Verbindungsgehäuse, die Pulverrutsche, den Mischraum zu der Abblasöffnung. Insbesondere ist die Gebläseeinrichtung direkt mit dem Verbindungsgehäuse verbunden. Die Gebläseeinrichtung erzeugt vorzugsweise einen Überdruck in dem Verbindungsgehäuse und/oder der Pulverrutsche und/oder dem Mischgehäuse. Im Speziellen verläuft der Luftströmungsweg somit von der Gebläseeinrichtung über das Verbindungsgehäuse, die erste Rohröffnung, die Pulverrutsche, die zweite Rohröffnung, den Mischraum zu der Abblasöffnung.

In einer konstruktiven Konkretisierung der Erfindung weist die Mischvorrichtung einen Mischtrichter zur Zuführung des Pulvers und des Heißwassers in den Mischraum auf, wobei der Mischtrichter oberhalb des Mischraums in dem Mischgehäuse angeordnet ist. Insbesondere dient der Mischtrichter dazu das Pulver und das Heißwasser vorzumischen. Vorzugsweise ist der Mischtrichter keilförmig oder konisch ausgebildet. Besonders bevorzugt ist ein oberer Abschnitt des Mischtrichters in einem oberen Bereich des Mischgehäuses formschlüssig und/oder reibschlüssig in dem Mischgehäuse aufgenommen. Im Speziellen ist der Mischtrichter lösbar in dem Mischgehäuse aufgenommen, z.B. eingeschoben und/oder eingesteckt.

Insbesondere weist der Mischtrichter einen ersten und einen zweiten Zylinderabschnitt sowie einen Kegelabschnitt auf, wobei die beiden Zylinderabschnitte unmittelbar über den Kegelabschnitt miteinander verbunden sind, so dass der Mischtrichter gebildet ist. Der erste Zylinderabschnitt bildet einen Trichtereinlass und der zweite Zylinderabschnitt bildet einen Trichterauslass. Vorzugsweise weist der erste Zylinderabschnitt an seiner radialen Außenseite eine Dichtmittelaufnahme zur Aufnahme eines Dichtmittels, z.B. ein Dichtring, auf. Insbesondere liegt der Mischtrichter, vorzugsweise der Zylinderabschnitt, besonders bevorzugt das Dichtmittel, in radialer Richtung und in Umlaufrichtung in Bezug auf die erste Hauptachse an dem Mischgehäuse an.

Ein unterer Abschnitt des Mischtrichters ist beabstandet zu dem Mischgehäuse angeordnet ist, so dass ein Zwischenraum gebildet ist, wobei die Abblasöffnung im Bereich des Zwischenraums angeordnet ist, so dass der Luftströmungsweg von der Gebläseeinrichtung über den Mischtrichter, den Mischraum, den Zwischenraum zu der Abblasöffnung verläuft. Vorzugsweise sind der zweite Zylinderabschnitt und/oder der Kegelabschnitt seitlich von dem Mischgehäuse beabstandet, so dass der Zwischenraum gebildet wird.

Während eines Betriebszustandes werden das Heißwasser und das Pulver in den Mischtrichter eingeleitet und im Mischtrichter vorgemischt. Das Gemisch läuft durch den Trichterauslass in den Mischraum ab, wobei durch die Gebläseeinrichtung der Wasserdampf nach unten in den Mischraum geblasen wird. Durch den in der Mischvorrichtung herrschenden Überdruck bzw. den Luftströmungsweg wird verhindert, dass der Wasserdampf zurück in den Mischtrichter aufsteigen kann. Vorzugsweise steigt der Wasserdampf somit von dem Mischraum aus seitlich an dem Mischtrichter über den Zwischenraum nach oben und wird über die Abblasöffnung ausgeblasen. Durch das Dichtmittel wird außerdem verhindert, dass der Wasserdampf zwischen dem ersten Zylinderabschnitt und dem Mischgehäuse weiter nach oben steigt.

In einer konkreten Umsetzung weist die Einlassanordnung mindestens oder genau zwei voneinander getrennte Einlassöffnungen auf, wobei eine erste Einlassöffnung für das Pulver und eine zweite Einlassöffnung für das Heißwasser geeignet und/oder ausgebildet ist. Insbesondere ist die erste Einlassöffnung im Bereich des Trichtereinlasses und die zweite Einlassöffnung in einer Mantelfläche des Mischtrichters angeordnet. Vorzugsweise ist die Einlassöffnung durch die zweite Rohröffnung gebildet. Besonders bevorzugt definiert die erste Einlassöffnung eine erste Hauptachse, wobei der Mischtrichter und/oder die Pulverrutsche und/oder das Mischgehäuse koaxial und/oder konzentrisch zu der ersten Hauptachse angeordnet sind.

Besonders bevorzugt ist die zweite Einlassöffnung in der Mantelfläche des ersten Zylinderabschnitts angeordnet. Insbesondere weist die Mischvorrichtung einen Wassertank zur Aufnahme des Heißwassers auf. Vorzugsweise ist der Wassertank beheizt und/oder beheizbar, so dass ein Kaltwasser aufgeheizt wird und in das Heißwasser umgewandelt wird. Besonders bevorzugt ist der Wassertank mit der zweiten Einlassöffnung verbunden, so dass das Heißwasser, vorzugsweise über ein Einlassventil, in den Mischraum geleitet wird.

Die Mischvorrichtung weist ein Trennelement zur Trennung des Pulvers von dem Heißwasser auf, wobei das Trennelement oberhalb des Mischraums in dem Mischgehäuse angeordnet ist. Das Trennelement hat die Funktion das Pulver und das Heißwasser während eines Betriebszustands im Bereich des Trichtereinlasses voneinander zu trennen, so dass das Heißwasser und das Pulver vorzugsweise erst im Bereich des Kegelabschnittes des Trichters zusammengeführt werden. Das Trennelement ist zwischen der ersten und der zweiten Einlassöffnung angeordnet. Insbesondere definiert die zweite Einlassöffnung eine zweite Hauptachse, wobei die erste und die zweite Hauptachse windschief und/oder orthogonal zueinander ausgerichtet sind.

In einer bevorzugten konstruktiven Ausgestaltung ist das Trennelement als ein Zylinderhut ausgebildet. Insbesondere weist das Trennelement einen Kragenabschnitt und einen dritten Zylinderabschnitt auf. Der Kragenabschnitt weist vorzugsweise eine kreisringförmige Grundfläche auf. Besonders bevorzugt weist der Kragenabschnitt an seiner radialen Außenseite und/oder an seiner Oberseite, welche sich vorzugsweise in einer Radialebene in Bezug auf die erste Hauptachse erstreckt, eine weitere Dichtmittelaufnahme zur Aufnahme eines weiteren Dichtmittels auf. Vorzugsweise ist das Trennelement koaxial und/oder konzentrisch zu der ersten Hauptachse angeordnet. Insbesondere sitzt der Kragenabschnitt auf dem Mischtrichter auf und ist in radialer Richtung in Bezug auf die erste Hauptachse formschlüssig und/oder reibschlüssig, im Speziellen über das Dichtmittel, mit dem Mischgehäuse bzw. in axialer Richtung in Bezug auf die erste Hauptachse mit der Pulverrutsche verbunden.

Alternativ kann das Trennelement auch innerhalb des Mischtrichters angeordnet sein, wobei der Kragenabschnitt in radialer Richtung in Bezug auf die erste Hauptachse formschlüssig und/oder reibschlüssig, im Speziellen über das Dichtmittel, mit dem ersten Zylinderabschnitt verbunden ist. Vorzugsweise ist das Trennelement lösbar in dem Mischgehäuse und/oder den Mischtrichter aufgenommen, z.B. eingeschoben und/oder eingesteckt.

Das Trennelement bildet eine Verlängerung zu der Pulverrutsche, so dass die erste Einlassöffnung durch das Trennelement gebildet ist. Der dritte Zylinderabschnitt ist insbesondere als ein Hohlzylinder ausgebildet und weist vorzugsweise den gleichen Innendurchmesser wie die Pulverrutsche auf. Insbesondere verlaufen der erste und der dritte Zylinderabschnitt gleichgerichtet, vorzugsweise parallel, zueinander in axialer Richtung in Bezug auf die erste Hauptachse. Besonders bevorzugt ist die zweite Einlassöffnung zwischen dem dritten und dem ersten Zylinderabschnitt angeordnet, so dass das Heißwasser tangential zwischen dem ersten und dem dritten Zylinderabschnitt eingeleitet wird. Anschließend wird das Heißwasser vorzugsweise spiralförmig entlang des Kegelabschnitts in Richtung des Trichterauslasses geleitet, wobei das Pulver im Bereich des Kegelabschnitts über die erste Einlassöffnung bzw. das Trennelement in den Mischtrichter eingeleitet wird und auf das Heißwasser trifft und/oder diesem beigemischt wird. Besonders bevorzugt wird das Pulver durch die Zufuhr von dem Heißwasser aufgelöst oder angelöst.

In einer weiteren Realisierung der Erfindung weist die Mischvorrichtung eine erste Baueinheit als Trockenabschnitt und eine zweite Baueinheit als Nassabschnitt auf. Insbesondere ist in dem Trockenabschnitt nur das Pulver und in dem Nassabschnitt das Pulver und das Wasser bzw. das Gemisch angeordnet bzw. geführt. Vorzugsweise sind die beiden Baueinheiten über die erste Einlassöffnung miteinander verbunden.

Die erste Baueinheit ist durch die Pulverrutsche und/oder das Verbindungsgehäuse und die zweite Baueinheit durch das Mischgehäuse und/oder den Mischtrichter und/oder das Trennelement gebildet. Insbesondere schließt das Trennelement bündig mit dem Mischgehäuse ab, so dass das Trennelement und/oder das Gehäuse flächig an den Verbindungsabschnitt und/oder der Pulverrutsche anliegen. Insbesondere sind die medienführenden Teile, vorzugsweise das Mischgehäuse und/oder der Mischtrichter und/oder das Trennelement und/oder die Pulverrutsche, aus Polytetrafluorethylen PTFE hergestellt und/oder weisen eine PTFE-Beschichtung auf. Dadurch wird eine Anhaftung von dem Pulver und/oder dem Wasserdampf und/oder dem Heißwasser und/oder dem Gemisch an den Flächen der medienführenden Teile stark reduziert.

In einer bevorzugten konstruktiven Umsetzung weist die Mischvorrichtung eine Befestigungsschiene zur Befestigung der ersten und der zweiten Baueinheit auf. Insbesondere ist die Fördervorrichtung und/oder der Vorratsbehälter und/oder das Verbindungsgehäuse und/oder das Mischgehäuse und/oder das Gebläse und/oder die Mischeinrichtung mit der Befestigungsschiene verbunden.

Die zweite Baueinheit ist über einen Schnellverschluss mit der Befestigungsschiene verbunden. Der Schnellverschluss hat die Funktion eine schnelle Montage und Demontage der zweiten Baueinheit zu ermöglichen um diese beispielsweise zu reinigen. Insbesondere ist der Schnellverschluss als eine Steck-Drehverbindung, vorzugsweise als ein Bajonettverschluss ausgebildet.

Einen weiteren Gegenstand der Erfindung bildet ein Getränkeautomat mit der Mischvorrichtung wie diese zuvor beschrieben wurde beziehungsweise nach einem der vorhergehenden Ansprüche.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: in einer Schnittdarstellung eine Mischvorrichtung als ein erstes Ausführungsbeispiel der Erfindung;
- Figur 2: zeigt in einer Vorderansicht einen Querschnitt durch die Mischvorrichtung;
- Figur 3: zeigt in gleicher Ansicht wie Figur 2 eine alternative Ausführung der Mischvorrichtung.

Einander entsprechende oder gleiche Teile sind in den Figuren jeweils mit den gleichen Bezugszeichen versehen.

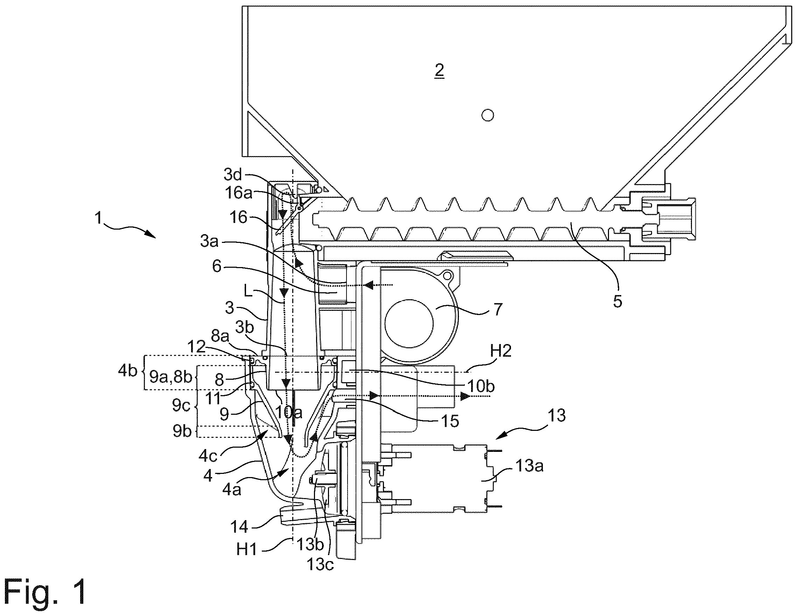

Figur 1 zeigt in einer Schnittdarstellung eine Mischvorrichtung 1 für einen Getränkeautomaten. Beispielsweise ist der Getränkeautoamt als ein Heißgetränkeautomat ausgebildet, welcher zur Zubereitung von z.B. Kaffee, Cappuccino, Trinkschokolade etc. ausgebildet ist. Die Mischvorrichtung 1 ist mit mindestens einem Vorratsbehälter 2 verbunden, wobei der Vorratsbehälter 2 zur Aufnahme mindestens eines Pulvers z.B. Kaffeepulver, Kakaopulver usw. ausgebildet und/oder geeignet ist. Die Mischvorrichtung 1 weist eine Pulverrutsche 3 und ein Mischgehäuse 4 auf, wobei die Pulverrutsche 3 das Mischgehäuse 4 mit dem Vorratsbehälter 2 verbindet, so dass das Pulver über die Pulverrutsche 3 in das Mischgehäuse 4 geleitet wird.

Der Vorratsbehälter 2 weist eine Fördereinrichtung 5 auf, wobei die Fördereinrichtung 5 beispielsweise eine Förderschnecke zur Beförderung des Pulvers aufweist. Der Vorratsbehälter 2 weist in dem Längsschnitt betrachtet eine Trichterform auf, so dass das Pulver in Richtung der Fördereinrichtung 5 rutscht und weiter durch die Fördereinrichtung 5 in Richtung der Pulverrutsche 3 transportiert wird. Ferner hat die Fördereinrichtung 5 die Funktion das Pulver zu portionieren und/oder zu dosieren.

Die Pulverrutsche 3 weist seitlich einen Einblasstutzen 6 auf, wobei der Einblasstutzen 6 einstückig, z.B. aus einem gemeinsamen Kunststoffspritzguss, mit der Pulverrutsche 3 verbunden ist, so dass eine erste Rohröffnung 3a gebildet ist. Die Pulverrutsche 3 ist rohrförmig und endseitig nach unten hin offen, so dass eine zweite Rohröffnung 3b gebildet ist. Die Pulverrutsche 3 ist rechtwinklig zu der Fördereinrichtung 5 angeordnet und direkt mit der Fördereinrichtung 5 verbunden.

Die Fördereinrichtung 5 endet oberhalb des Einblasstutzens 6 seitlich in der Pulverrutsche 3, wobei das geförderte Pulver über die Pulverrutsche 3 nach unten durch die zweite Rohröffnung 3b in Richtung des Mischgehäuses 4 fällt. Die Mischvorrichtung 1 weist eine Gebläseeinrichtung 7 zur Erzeugung einer Luftströmung auf. Die Pulverrutsche 3 ist luftdicht mit dem Mischgehäuse 4, der Fördereinrichtung 5 und der Gebläseeinrichtung 7 verbunden. Insbesondere ist die Gebläseeinrichtung 7 direkt mit dem Einblasstutzen 6 verbunden. Beispielsweise ist die Gebläseeinrichtung 7 als ein Radialventilator ausgebildet.

Die Mischvorrichtung 1 weist ein Trennelement 8 und einen Mischtrichter 9 auf, wobei die das Trennelement 8 und der Mischtrichter 9 in dem Mischgehäuse 4 angeordnet sind. Das Mischgehäuse 4 weist eine erste und eine zweite Einlassöffnung 10a, b auf, wobei die erste Einlassöffnung 10a zur Zuführung des Pulvers und die zweite Einlassöffnung 10b zur Zuführung eines Heißwassers dient. Die erste Einlassöffnung 9a definiert dabei eine erste und die zweite Einlassöffnung 9b eine zweite Hauptachse H1, H2. Die beiden Hauptachsen H1, H2 sind beispielsweise rechtwinklig zueinander angeordnet. Die Pulverrutsche 3, das Trennelement 8 und der Mischtrichter 9 sind koaxial und/oder konzentrisch zu der ersten Hauptachse H1 angeordnet.

Der Mischtrichter 9 dient dazu, das Pulver und das Heißwasser vorzumischen, so dass das Pulver in dem Heißwasser zumindest teilweise gelöst ist. Der Mischtrichter 9 weist einen ersten und einen zweiten Zylinderabschnitt 9a, b und einen Kegelabschnitt 9c auf, wobei der erste und der zweite Zylinderabschnitt 9a, b über den Kegelabschnitt 9c unmittelbar miteinander verbunden sind, so dass ein Trichter gebildet ist. Der erste Zylinderabschnitt 9a bildet dabei einen Trichtereinlass und der zweite Zylinderabschnitt 9b einen Trichterauslass. Das Gemisch aus dem Pulver und dem Heißwasser wird über den Trichterauslass weiter in einen Mischraum 4a des Mischgehäuses 4 weitergeleitet. Der erste Zylinderabschnitt 9a weist an seiner radialen Außenseite eine erste Dichtmittelaufnahme zur Aufnahme eines ersten Dichtmittels 11, als eine Dichtmittelaufnahme und ein Dichtmittel, auf. Beispielsweise ist die erste Dichtmittelaufnahme eine umlaufende Nut und/oder das erste Dichtmittel ein O-Ring. Ferner weist der erste Zylinderabschnitt 9a die zweite Einlassöffnung 10b auf bzw. ist mit dieser verbunden. Der Kegelabschnitt 9c und der zweite Zylinderabschnitt 9b sind in radialer Richtung in Bezug auf die erste Hauptachse H1 beabstandet zu dem Mischgehäuse 4 angeordnet, so dass ein Zwischenraum 4c gebildet ist.

Das Trennelement 8 dient dazu, dass durch die zweite Einlassöffnung 10b im Bereich des Trichtereinlasses eingeleitete Heißwasser, von dem Pulver abzutrennen, so dass das Heißwasser und das Pulver erst im Bereich des Kegelabschnitts 9c zusammengeführt werden. Das Trennelement 8 ist als ein Zylinderhut ausgebildet, wobei das Trennelement 8 einen Kragenabschnitt 8a und einen dritten Zylinderabschnitt 8b aufweist. Das Trennelement 8, insbesondere der dritte Zylinderabschnitt 8b, verlängert die Pulverrutsche 3 in axialer Richtung in Bezug auf die erste Hauptachse H1 in Richtung des Mischraums 4a. Der erste und der dritte Zylinderabschnitt 9a, 8b erstrecken sich in axialer Richtung in Bezug auf die Hauptachse H1 gleichgerichtet und beabstandet zueinander in Richtung des Mischraums 4a. Die Pulverrutsche 3, insbesondere die zweite Rohröffnung 3b, und der dritte Zylinderabschnitt 8b weisen einen gleichen Innendurchmesser auf. Der Kragenabschnitt 8a weist an seiner radialen Außenseite eine zweite Dichtmittelaufnahme zur Aufnahme eines zweiten Dichtmittels 12a, als eine weitere Dichtmittelaufnahme und ein weiteres Dichtmittel, auf.

Da Mischgehäuse 4 weist einen Aufnahmeabschnitt 4b zur Aufnahme des Trennelements 8 und des Mischtrichters 9 auf. Der erste Zylinderabschnitt 9a und der Kragenabschnitt 8a sind in dem Aufnahmeabschnitt 4b angeordnet, wobei der Kragenabschnitt 8a auf dem ersten Zylinderabschnitt 9a aufliegt. Die beiden Dichtmittel 11, 12 liegen in radialer Richtung in Bezug auf die erste Hauptachse H1 an dem Aufnahmeabschnitt 4b an, so dass das Mischgehäuse 4 durch die beiden Dichtmittel 11, 12 luftdicht abgeschlossen ist.

Die Mischvorrichtung 1 weist eine Mischeinrichtung 13, umfassend einen Antriebsmotor 13a, eine Antriebswelle 13b und ein Rührelement 13c, auf. Die Mischeinrichtung 13 ist mit dem Mischgehäuse 4 luftdicht verbunden. Das Rührelement 13c ist endseitig drehfest mit der Antriebswelle 13b verbunden, wobei eine Drehbewegung von dem Antriebsmotor 13a erzeugt wird und über die Antriebswelle 13b auf das Rührelement 13c übertragen wird. Das Rührelement 13c ist dabei innerhalb des Mischraums 4a angeordnet, wobei bei einer Zubereitung, das Gemisch in dem Mischraum 4a durch eine schnelle Rotation des Rührelements 13c homogenisiert wird und über einen Auslassöffnung 14, z.B. ein Auslassrohr, des Mischgehäuses 4 in einen Behälter, z.B. einen Trinkbecher, abläuft.

Das Mischgehäuse 4 weist eine Abblasöffnung 15 auf, wobei die Abblasöffnung 15 oberhalb des Mischraums 4a im Bereich des Zwischenraums 4c angeordnet ist. Beispielsweise ist die Abblasöffnung 15 durch eine Bohrung oder einen Kanal in der Gehäusewand des Mischgehäuses 4 gebildet. Die Abblasöffnung 15 ist unmittelbar unterhalb des Aufnahmeabschnitts 4b angeordnet, so dass die Abblasöffnung 15 an einem höchsten Punkt innerhalb des Mischgehäuses 4 angeordnet ist. Durch die Abblasöffnung 15 kann der durch das Heißwasser entstehende Wasserdampf aus dem Mischgehäuse 4 entweichen. Beispielsweise endet die Abblasöffnung 15 in einer Abscheideeinrichtung, wobei sich der Wasserdampf und/oder Pulverrückstände in der Abscheideeinrichtung absetzen.

Die von der Gebläseeinrichtung 7 erzeugte Luftströmung verläuft von der Gebläseeinrichtung 7 über die erste Rohröffnung 3a, den Einblasstutzen 6, die Pulverrutsche 3, die zweite Rohröffnung 3b, den dritten Zylinderabschnitt 8b, die erste Einlassöffnung 10a, den Kegelabschnitt 9c, den zweiten Zylinderabschnitt 9b, den Mischraums 4a, den Zwischenraum 4c zu der Abblasöffnung 15 entlang eines Luftströmungswegs L. Durch den Verlauf des Luftströmungswegs L wird sichergestellt, dass Pulverrückstände innerhalb der Pulverrutsche 3 größtenteils ausgeblasen werden und somit eine Pulververstopfung verhindert wird. Die Fördereinrichtung 5 weist eine Verschlussklappe 16 auf, wobei die Verschlussklappe 16 an dem Vorratsbehälter 2 angeordnet ist. Die Verschlussklappe 16 dient insbesondere dazu die Fördereinrichtung 5 bei einer Demontage der Pulverrutsche 3 zu verschließen, so dass die Fördereinrichtung 5 endseitig verschlossen ist und ein Pulveraustritt dadurch verhindert wird.

Die Pulverrutsche 3 weist eine Anschlagkontur 3d auf, wobei die Anschlagkontur 3d als ein sich in axialer Richtung in Bezug auf die erste Hauptachse H1 erstreckender Steg oder Zapfen etc. ausgebildet ist. Beispielsweise ist die Anschlagkontur einstückig z.B. aus einem Guss mit der Pulverrutsche 3 verbunden. Die Verschlussklappe 16 weist einen Betätigungsflügel 16a auf. Bei montierter Pulverrutsche 3 liegt die Anschlagkontur 3d an dem Betätigungsflügel 16a an, wobei dadurch die Verschlussklappe 3 in einer geöffneten Stellung gehalten ist.

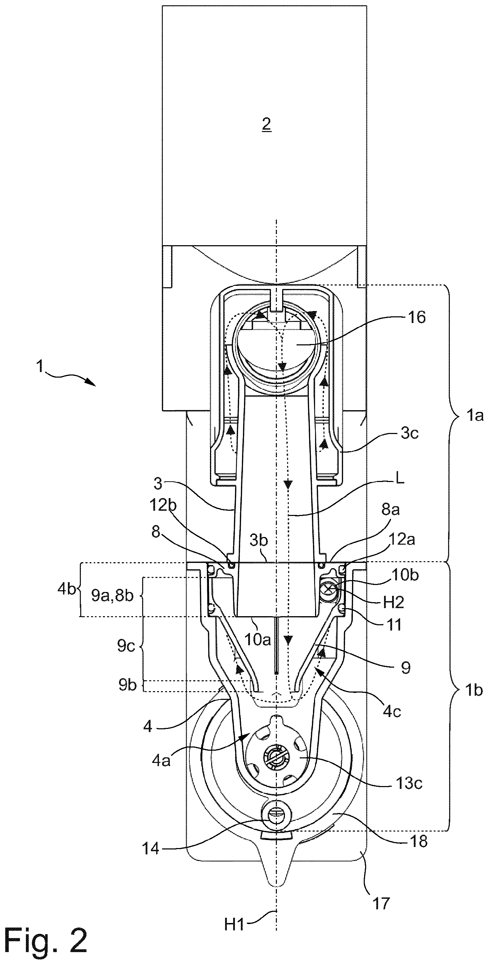

Figur 2 zeigt in einer Vorderansicht einen Querschnitt durch die Mischvorrichtung 1. Die beiden Hauptachsen H1, H2 sind beabstandet zueinander angeordnet, wobei die erste Hauptachse H1 rechtwinklig zu der zweiten Hauptachse H2 ausgerichtet ist. Die zweite Einlassöffnung 10b ist zwischen dem ersten und dem dritten Zylinderabschnitt 9a, 8b angeordnet. Beim Einströmen des Heißwassers wird dieses tangential an dem Trennelement 8 vorbeigeleitet und fließt anschließend über den Kegelabschnitt 9c in Richtung des Mischraums 4a durch den Trichterauslass ab. Das Pulver wird durch die erste Einlassöffnung 10a dem Heißwasser im Bereich des Kegelabschnitts 9c beigemischt, so dass das Pulver und das Heißwasser beispielsweise vorgemischt werden.

Ferner weist der Kragenabschnitt 8a an seiner Oberseite eine dritte Dichtmittelaufnahme zur Aufnahme eines dritten Dichtmittels 12b, als die weitere Dichtmittelaufnahme und das weitere Dichtmittel, auf. Insbesondere wird die Oberseite durch eine kreisringförmige Fläche gebildet, welche sich in einer Radialebene in Bezug auf die erste Hauptachse H1 erstreckt. Das dritte Dichtmittel 12b hat die Funktion die Pulverrutsche 3 gegenüber dem Mischgehäuse 4 bzw. gegenüber dem Trennelement 8 abzudichten. Beispielsweise sind die zweite bzw. die dritte Dichtmittelaufnahme als die umlaufende Nut und/oder das zweite bzw. das dritte Dichtmittel 12a, b als der O-Ring ausgebildet.

Die Mischvorrichtung 1 weist eine erste und eine zweite Baueinheit 1a, b auf, wobei die erste Baueinheit 1a einen Trockenabschnitt und die zweite Baueinheit 1b einen Nassabschnitt bildet. Die erste Baueinheit 1a wird durch die Pulverrutsche 3 gebildet, wobei die erste Baueinheit 1a zum Transport des Pulvers dient. Die zweite Baueinheit 1b umfasst das Mischgehäuse 4, das Trennelement 8 und den Mischtrichter 9, wobei die zweite Baueinheit 1b zum Transport des Pulvers und des Heißwassers bzw. des Gemisches dient.

Die Mischvorrichtung 1 weist eine Befestigungsschiene 17 auf, wobei die Befestigungsschiene 17 beispielsweise an dem Vorratsbehälter 2 montiert ist und zur Befestigung der ersten und der zweiten Baueinheit 1a, b sowie der Mischeinrichtung 13 und der Gebläseeinrichtung 7 dient. Die Pulverrutsche 3 ist beispielsweise auf die Fördereinrichtung 5 aufgesteckt und/oder mit der Befestigungsschiene 17 z.B. kraftschlüssig und/oder formschlüssig und/oder reibschlüssig und/oder stoffschlüssig verbunden. Die zweite Baueinheit 1b ist lösbar mit der Befestigungsschiene 17 verbunden. Hierzu weist die zweite Baueinheit 1b einen Schnellverschluss 18 auf. Der Schnellverschluss 18 bildet zusammen mit der Befestigungsschiene 17 einen Bajonettverschluss. Das Mischgehäuse 4 weist hierzu einen Bajonettring auf, wobei der Bajonettring durch eine Steck-Drehbewegung mit der Befestigungsschiene 17 verbindbar ist.

In der gezeigten Darstellung weist die Pulverrutsche 3 einen Luftzuführungsabschnitt 3c auf. Der Luftzuführungsabschnitt 3c schließt sich unmittelbar an den Einblasstutzen 6, nicht dargestellt, an, so dass die Luftströmung L seitliche über den Luftzuführungsabschnitt 3c nach oben strömt und oberhalb der Verschlussklappe 16 in Richtung der zweiten Rohröffnung 3b strömt. Durch die Luftströmung L wird sichergestellt, dass Pulverreste, z.B. Anhaftungen an den Seitenwänden etc., in den Mischraum 4a abgeblasen werden.

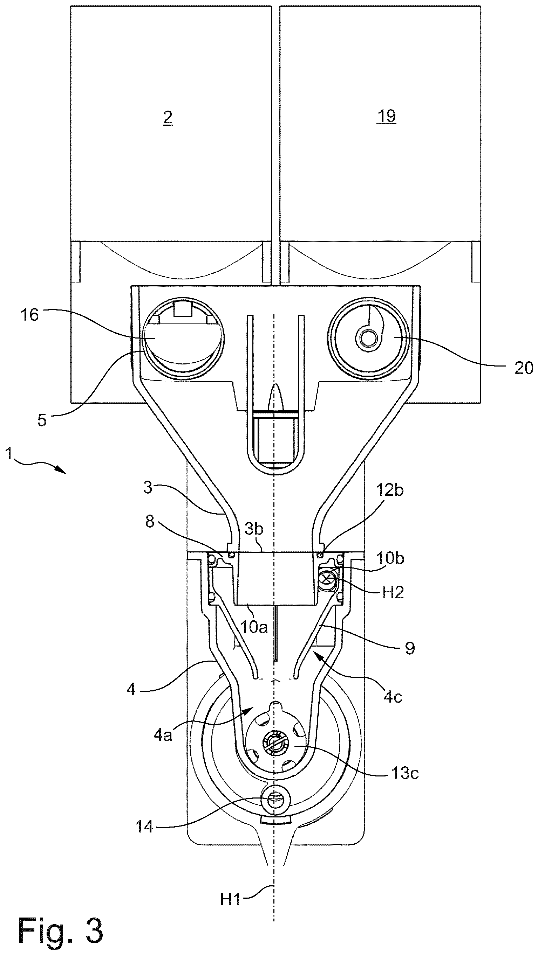

Fig. 3 zeigt eine alternative Ausführung der Mischvorrichtung 1, wobei die Mischvorrichtung 1 über die Pulverrutsche 3 mit dem Vorratsbehälter 2 und einem weiteren Vorratsbehälter 19 verbunden ist. Beispielsweise dient der weitere Vorratsbehälter 19 zur Aufnahme eines weiteren Mediums, z.B. weiteres Pulver oder eine Flüssigkeit, wobei das weitere Medium dem Pulver beimischbar ist. Beispielsweise ist das weitere Medium als Milchpulver und/oder Zucker etc. oder als Sirup etc. ausgebildet. Alternativ ist das weitere Pulver zur Herstellung eines weiteren Heißgetränks, z.B. Suppe, Trinkschokolade etc. geeignet.

Der weitere Vorratsbehälter 19 weist eine weitere Fördereinrichtung 20 auf, wobei die weitere Fördereinrichtung 20 beispielsweise baugleich zu der Fördereinrichtung 5 ausgebildet ist. Die weitere Fördereinrichtung 20 dient zur Beförderung des weiteren Pulvers in Richtung der Pulverrutsche 3. Die Pulverrutsche 3 ist in der gezeigten Vorderansicht Y-förmig ausgebildet, wobei die Pulverrutsche 3 die beiden Vorratsbehälter 2, 19 miteinander verbindet, so dass die erste Einlassöffnung 10a einen gemeinsamen Einlass für das Pulver und das weitere Pulver bildet.

### Bezugszeichenliste

- 1: Mischvorrichtung
- 1a: erste Baueinheit
- 1b: zweite Baueinheit
- 2: Vorratsbehälter
- 3: Pulverrutsche
- 3a: erste Rohröffnung
- 3b: zweite Rohröffnung
- 3c: Luftzuführungsabschnitt
- 3d: Anschlagkontur
- 4: Mischgehäuse
- 4a: Mischraum
- 4b: Aufnahmeabschnitt
- 4c: Zwischenraum
- 5: Fördereinrichtung
- 6: Einblasstutzen
- 7: Gebläseeinrichtung
- 8: Trennelement
- 8a: Kragenabschnitt
- 8b: dritter Zylinderabschnitt
- 9: Mischtrichter
- 9a: erster Zylinderabschnitt
- 9b: zweiter Zylinderabschnitt
- 9c: Kegelabschnitt
- 10a: erste Einlassöffnung
- 10b: zweite Einlassöffnung
- 11: erstes Dichtmittel
- 12a: zweites Dichtmittel
- 12b: drittes Dichtmittel
- 13: Mischeinrichtung
- 13a: Antriebsmotor
- 13b: Antriebswelle
- 13c: Rührelement
- 14: Auslassöffnung
- 15: Abblasöffnung
- 16: Verschlussklappe
- 17: Befestigungsschiene
- 18: Schnellverschluss
- 19: weiterer Vorratsbehälter
- 20: weitere Fördereinrichtung

- H1: erste Hauptachse
- H2: zweite Hauptachse
- L: Luftströmungsweg

## Patentansprüche

1. Mischvorrichtung (1) für einen Getränkeautomaten,
mit einem Mischgehäuse (4), wobei das Mischgehäuse (4) einen Mischraum (4a) zur Aufnahme eines Pulvers und eines Heißwassers aufweist, wobei das Mischgehäuse (4) eine Einlassanordnung für das Pulver und/oder das Heißwasser aufweist,
mit einer Mischeinrichtung (13) zur Vermischung des Pulvers und des Heißwassers innerhalb des Mischraums (4a), wobei das Mischgehäuse (4) einen Auslassöffnung (14) für das Gemisch aufweist,
wobei die Mischvorrichtung (1) eine Gebläseeinrichtung (7) und eine Abblasöffnung (15) aufweist, wobei die Gebläseeinrichtung (7) eine Luftströmung (L) erzeugt, so dass ein Wasserdampf des Heißwassers aus dem Mischgehäuse (4) über die Abblasöffnung (15) abgeblasen wird, **dadurch gekennzeichnet, dass** ein Luftströmungsweg (L) von der Gebläseeinrichtung (7) über das Mischgehäuse (4) zu der Abblasöffnung (15) verläuft.

2. Mischvorrichtung (1) nach Anspruch 1, **dadurch gekennzeichnet, dass** der Luftströmungsweg (L) innerhalb eines luftdicht abgeschlossenes System verläuft.

3. Mischvorrichtung nach Anspruch 1 oder 2, **dadurch gekennzeichnet, dass** das Mischgehäuse (1) die Abblasöffnung (15) aufweist, wobei die Abblasöffnung (15) oberhalb des Mischraums (4a) angeordnet ist.

4. Mischvorrichtung (1) nach einem der vorhergehenden Ansprüche, **dadurch gekennzeichnet, dass** die Mischvorrichtung (1) eine Pulverrutsche (3) zur Verbindung des Mischgehäuses (4) mit mindestens einem Vorratsbehälter (2, 19) für das Pulver aufweist, wobei die Gebläseeinrichtung (7) mit der Pulverrutsche (3) strömungstechnisch verbunden ist, so dass der Luftströmungsweg (L) von der Gebläseeinrichtung (7) über die Pulverrutsche (3), das Mischgehäuse (4) zu der Abblasöffnung (15) verläuft.

5. Mischvorrichtung nach Anspruch 4, **dadurch gekennzeichnet, dass** die Pulverrutsche (3) einen Einblasstutzen (6) zur Aufnahme der Gebläseeinrichtung (7) sowie einen Luftzuführungsabschnitt (3c) zur strömungstechnischen Verbindung des Einblasstutzens (6) mit der Pulverrutsche (3) aufweist, so dass der Luftströmungsweg (L) von dem Einblasstutzen (6) über den Luftführungsabschnitt (3c) durch die Pulverrutsche (3) verläuft.

6. Mischvorrichtung (1) nach Anspruch 4, **dadurch gekennzeichnet, dass** die Mischvorrichtung (1) ein Verbindungsgehäuse aufweist, wobei ein Eingang in die Pulverrutsche (3) zumindest abschnittsweise innerhalb des Verbindungsgehäuses angeordnet ist, wobei der Luftströmungsweg (L) von der Gebläseeinrichtung (7) über das Verbindungsgehäuse, die Pulverrutsche (3), das Mischgehäuse (4) zu der Abblasöffnung (15) verläuft.

7. Mischvorrichtung (1) nach einem der vorhergehenden Ansprüche, **dadurch gekennzeichnet, dass** die Mischvorrichtung (1) einen Mischtrichter (9) zur Zuführung des Pulvers und des Heißwassers in den Mischraum (4a) aufweist, wobei der Mischtrichter (9) oberhalb des Mischraums (4a) in dem Mischgehäuse (4) angeordnet ist, wobei mindestens ein unterer Abschnitt des Mischtrichters (9) beabstandet zu dem Mischgehäuse (4) angeordnet ist, so dass ein Zwischenraum (4c) gebildet ist, wobei die Abblasöffnung (15) im Bereich des Zwischenraums (4c) angeordnet ist, so dass der Luftströmungsweg (L) von der Gebläseeinrichtung (7) über den Mischtrichter (9), den Mischraum (4a), den Zwischenraum (4c) zu der Abblasöffnung (15) verläuft

8. Mischvorrichtung (1) nach einem der vorhergehenden Ansprüche, **dadurch gekennzeichnet, dass** die Einlassanordnung zwei voneinander getrennte Einlassöffnungen (10a, b) aufweist, wobei eine erste Einlassöffnung (10a) für das Pulver und eine zweite Einlassöffnung (10b) für das Heißwasser geeignet und/oder ausgebildet ist, wobei die Mischvorrichtung (1) ein Trennelement (8) zur Trennung des Pulvers von dem Heißwasser aufweist, wobei das Trennelement (8) oberhalb des Mischraums (4a) in dem Mischgehäuse (4) angeordnet ist, und wobei das Trennelement (8) zwischen der ersten Einlassöffnung (10a) und der zweiten Einlassöffnung (10b) angeordnet ist.

9. Mischvorrichtung (1) nach einem oder mehreren der Ansprüche 4 bis 8, **dadurch gekennzeichnet, dass** das Trennelement (8) als ein Zylinderhut ausgebildet ist, wobei das Trennelement eine Verlängerung zu der Pulverrutsche (3) in Richtung des Mischraums (4a) bildet, so dass die erste Einlassöffnung (10a) durch das Trennelement (8) gebildet ist.

10. Mischvorrichtung (1) nach einem oder mehreren der Ansprüche 4 bis 9, **dadurch gekennzeichnet, dass** die Mischvorrichtung (1) eine erste Baueinheit (1a) als Trockenabschnitt und eine zweite Baueinheit (1b) als Nassabschnitt aufweist, wobei die erste Baueinheit (1a) durch die Pulverrutsche (3) und/oder das Verbindungsgehäuse und die zweite Baueinheit (1b) durch das Mischgehäuse (4) und/oder den Mischtrichter (9) und/oder das Trennelement (8) gebildet ist.

11. Mischvorrichtung (1) nach Anspruch 10, **dadurch gekennzeichnet, dass** die Mischvorrichtung (1) eine Befestigungsschiene (17) zur Befestigung der ersten und der zweiten Baueinheit (1a, b) aufweist, wobei die zweite Baueinheit (1b) über einen Schnellverschluss (18) mit der Befestigungsschiene (17) verbunden ist.

12. Getränkeautomat mit der Mischvorrichtung (1) nach einem der vorhergehenden Ansprüche.

## Claims

1. A mixing device (1) for a beverage vending machine,
having a mixing chamber (4), wherein the mixing chamber (4) has a mixing space (4a) for receiving a powder and a hot water, wherein the mixing chamber (4) has an inlet arrangement for the powder and/or the hot water,
having a mixing apparatus (13) for mixing the powder with the hot water inside the mixing space (4a), wherein the mixing chamber (4) has an outlet opening (14) for the mixture,
wherein the mixing device (1) has a blower apparatus (7) and a blow-off opening (15), wherein the blower apparatus (7) creates an air flow (L), so that a water vapor of the hot water is blown off from the mixing chamber (4) via the blow-off opening (15),
**characterized in that** an air flow path (L) extends from the blower apparatus (7) via the mixing chamber (4) to the blow-off opening (15).

2. The mixing device (1) according to Claim 1, **characterized in that** the air flow path (L) extends inside a hermetically sealed system.

3. The mixing device according to Claim 1 or 2, **characterized in that** the mixing chamber (1) has the blow-off opening (15), wherein the blow-off opening (15) is arranged above the mixing space (4a).

4. The mixing device (1) according to any one of the preceding claims, **characterized in that** the mixing device (1) has a powder chute (3) for connecting the mixing chamber (4) with at least one storage container (2, 19) for the powder, wherein the blower apparatus (7) is fluidically connected with the powder chute (3), so that the air flow path (L) extends from the blower apparatus (7) via the powder chute (3) and the mixing chamber (4) to the blow-off opening (15).

5. The mixing device according to Claim 4, **characterized in that** the powder chute (3) has a blow-in nozzle (6) for receiving the blower apparatus (7) and an air routing section (3c) for fluidically connecting the blow-in nozzle (6) with the powder chute (3), so that the air flow path (L) extends from the blow-in nozzle (6) via the air routing section (3c) through the powder chute (3).

6. The mixing device (1) according to Claim 4, **characterized in that** the mixing device (1) has a connecting chamber, wherein one intake into the powder chute (3) is arranged, at least in sections, inside the connecting chamber, wherein the air flow path (L) extends from the blower apparatus (7) via the connecting chamber, the powder chute (3) and the mixing chamber (4) to the blow-off opening (15).

7. The mixing device (1) according to any one of the preceding claims, **characterized in that** the mixing device (1) has a mixing funnel (9) for delivering the powder and the hot water into the mixing space (4a), wherein the mixing funnel (9) is arranged above the mixing space (4a) in the mixing chamber (4), wherein at least a lower section of the mixing funnel (9) is arranged at a distance from the mixing chamber (4), so that an intermediate space (4c) is formed, wherein the blow-off opening (15) is arranged in the region of the intermediate space (4c), so that the air flow path (L) extends from the blower apparatus (7) via the mixing funnel (9), the mixing space (4a) and the intermediate space (4c) to the blow-off opening (15).

8. The mixing device (1) according to any one of the preceding claims, **characterized in that** the inlet arrangement has two spatially separated inlet openings (10a, b), wherein a first inlet opening (10a) is suitable and/or configured for the powder and a second inlet opening (10b) is suitable and/or configured for the hot water, wherein the mixing device (1) has a separator element (8) for separating the powder from the hot water, wherein the separator element (8) is arranged above the mixing space (4a) in the mixing chamber (4), and wherein the separator element (8) is arranged between the first inlet opening (10a) and the second inlet opening (10b).

9. The mixing device (1) according to one or more of Claims 4 to 8, **characterized in that** the separator element (8) is configured as a top hat shape, wherein the separator element constitutes an extension of the powder chute (3) in the direction of the mixing space (4a), so that the first inlet opening (10a) is formed by the separator element (8).

10. The mixing device (1) according to one or more of Claims 4 to 9, **characterized in that** the mixing device (1) has a first unit (1a) as its dry section and a second unit (1b) as its wet section, wherein the first unit (1a) is formed by the powder chute (3) and/or the connecting chamber and the second unit (1 b) is formed by the mixing chamber (4) and/or the mixing funnel (9) and/or the separator element (8).

11. The mixing device (1) according to Claim 10, **characterized in that** the mixing device (1) has a fastening rail (17) for fastening the first and second units (1a, b), wherein the second unit (1b) is connected to the fastening rail (17) via a quick-release fastener (18).

12. A beverage vending machine with the mixing device (1) according to any one of the preceding claims.

## Revendications

1. Dispositif de mélange (1) d'un distributeur de boissons,
doté d'un boîtier de mélange (4), dans lequel le boîtier de mélange (4) présente une chambre de mélange (4a) pour recevoir de la poudre et de l'eau chaude, le boîtier de mélange (4) présentant un ensemble d'admission de la poudre et/ou de l'eau chaude,
doté d'un appareil de mélange (13) pour brasser la poudre et l'eau chaude à l'intérieur de la chambre de mélange (4a), dans lequel le boîtier de mélange (4) présente une ouverture d'évacuation (14) du mélange,
dans lequel
le dispositif de mélange (1) présente un appareil de ventilation (7) et une ouverture d'échappement (15), dans lequel l'appareil de ventilation (7) génère un écoulement d'air (L), de sorte que de la vapeur d'eau chaude est relâchée hors du boîtier de mélange (4) par l'ouverture d'échappement (15), **caractérisé en ce que** le trajet d'écoulement d'air (L) s'étend de l'appareil de ventilation (7) jusqu'à l'ouverture d'échappement (15) en passant par le boîtier de mélange (4).

2. Dispositif de mélange (1) selon la revendication 1, **caractérisé en ce que** le trajet d'écoulement d'air (L) passe à l'intérieur d'un système fermé hermétiquement.

3. Dispositif de mélange selon la revendication 1 ou 2, **caractérisé en ce que** le boîtier de mélange (1) présente l'ouverture d'échappement (15), dans lequel l'ouverture d'échappement (15) est disposée au-dessus de la chambre de mélange (4a).

4. Dispositif de mélange (1) selon l'une quelconque des revendications précédentes, **caractérisé en ce que** le dispositif de mélange (1) présente une goulotte d'alimentation en poudre (3) pour relier le boîtier de mélange (4) à au moins un réservoir (2, 19) de la poudre, dans lequel l'appareil de ventilation (7) est relié à la goulotte d'alimentation en poudre (3) par un raccordement fluidique, de sorte que le trajet d'écoulement d'air (L) s'étend de l'appareil de ventilation (7) jusqu'à l'ouverture d'échappement (15) en passant par la goulotte d'alimentation en poudre (3) et le boîtier de mélange (4).

5. Dispositif de mélange selon la revendication 4, **caractérisé en ce que** la goulotte d'alimentation en poudre (3) présente une tubulure d'insufflation (6) pour loger l'appareil de ventilation (7) ainsi qu'un tronçon d'amenée d'air (3c) servant au raccordement fluidique de la tubulure d'insufflation (6) à la goulotte d'alimentation en poudre (3), de sorte que le trajet d'écoulement d'air (L) s'étend de la tubulure d'insufflation (6) à travers la goulotte d'alimentation en poudre (3) en passant par le tronçon d'amenée d'air (3c).

6. Dispositif de mélange selon la revendication 4, **caractérisé en ce que** le dispositif de mélange (1) présente un boîtier de raccordement, dans lequel une entrée est disposée dans la goulotte d'alimentation en poudre (3) au moins partiellement à l'intérieur du boîtier de raccordement, le trajet d'écoulement d'air (L) s'étendant de l'appareil de ventilation (7) jusqu'à l'ouverture d'échappement (15) en passant par le boîtier de raccordement, la goulotte d'alimentation en poudre (3) et le boîtier de mélange (4).

7. Dispositif de mélange (1) selon l'une quelconque des revendications précédentes, **caractérisé en ce que** le dispositif de mélange (1) présente une trémie de mélange (9) pour amener la poudre et l'eau chaude dans la chambre de mélange (4a), dans lequel la trémie de mélange (9) est disposée au-dessus de la chambre de mélange (4a) dans le boîtier de mélange (4), dans lequel au moins une partie inférieure de la trémie de mélange (9) est disposée à distance du boîtier de mélange (4), de sorte qu'un interstice (4c) se forme, dans lequel l'ouverture d'échappement (15) est disposée dans la zone de l'interstice (4c), de sorte que le trajet d'écoulement d'air (L) s'étend de l'appareil de ventilation (7) jusqu'à l'ouverture d'échappement (15) en passant par la trémie de mélange (9), la chambre de mélange (4a) et l'interstice (4c).

8. Dispositif de mélange (1) selon l'une quelconque des revendications précédentes, **caractérisé en ce que** l'ensemble d'admission présente deux ouvertures d'admission (10a, b) séparées l'une de l'autre, dans lequel une première ouverture d'admission (10a) est appropriée et/ou conçue pour la poudre et une seconde ouverture d'admission (10b) pour l'eau chaude, dans lequel le dispositif de mélange (1) présente un élément de séparation (8) pour isoler la poudre de l'eau chaude, dans lequel l'élément de séparation (8) est disposé au-dessus de la chambre de mélange (4a) à l'intérieur du boîtier de mélange (4), et dans lequel l'élément de séparation (8) est disposé entre la première ouverture d'admission (10a) et la seconde ouverture d'admission (10b).

9. Dispositif de mélange (1) selon l'une ou plusieurs des revendications 4 à 8, **caractérisé en ce que** l'élément de séparation (8) est constitué d'un cylindre, dans lequel l'élément de séparation forme un prolongement de la goulotte d'alimentation en poudre (3) en direction de la chambre de mélange (4a), de sorte que la première ouverture d'admission (10a) est formée par l'élément de séparation (8).

10. Dispositif de mélange (1) selon l'une ou plusieurs des revendications 4 à 9, **caractérisé en ce que** le dispositif de mélange (1) présente une première unité modulaire (1a) sous la forme d'une partie sèche et une seconde unité modulaire (1b) sous la forme d'une partie humide, dans lequel la première unité modulaire (1a) est formée par la goulotte d'alimentation en poudre (3) et/ou le boîtier de raccordement et la seconde unité modulaire (1b) par le boîtier de mélange (4) et/ou la trémie de mélange (9) et/ou l'élément de séparation (8).

11. Dispositif de mélangé selon la revendication 10, **caractérisé en ce que** le dispositif de mélange (1) présente un rail de fixation (17) pour fixer les première et seconde unités modulaires (1a, b), dans lequel la seconde unité modulaire (1b) est reliée au rail de fixation (17) par une attache rapide (18).

12. Distributeur de boissons doté du dispositif de mélange (1) selon l'une quelconque des revendications précédentes.
